# EUROPEAN PATENT APPLICATION

(11) **EP 2 816 522 A1**
(43) Date of publication of application: **24.12.2014**
(21) Application number: 14151965.2
(22) Date of filing: 21.01.2014
(51) Int. Cl.: G06Q 30/06

(54) **Display method in combination with the three-dimensional shopping platform and the geographical positioning device**

(30) Priority: 17.06.2013 CN 201310240600; 02.01.2014 WO PCT/CN2014/070012
(71) Applicant: Spreadtrum Communications (Shanghai) Co., Ltd., Zhangjiang High Tech Park Podong District Shanghai 201203 (CN)
(72) Inventor: Xia, Lu, 201203 Pudongxinqu (CN); Jin, Hengzhuang, 201203 Pudongxinqu (CN); Liu, Haipeng, 201203 Pudongxinqu (CN)
(74) Representative: Wilson Gunn

(57) **Abstract**

A displaying method in combination with the three-dimensional shopping platform and the geographical positioning device, relates to the electronic business technical field, more specifically, to a shopping platform. The three-dimensional platform displays on the mobile terminals by a three-dimensional shopping platform displaying system, comprising a server. The mobile terminal is connected to a positioning module which determines the current geographical position of the mobile terminal and transmits the geographical position information to the server. The three-dimensional shopping platform adds the information of the virtual stores corresponding to the physical stores located within a certain distance from the current geographical position into the basic data. The three-dimensional shopping platform displaying system forms a three-dimensional model used for displaying the virtual stores corresponding to the physical stores nearby by the arrays according to the basic data and model units. The three-dimensional shopping platform displaying system makes the physical stores corresponding to the model units. The stores and merchandises of the present invention are displayed in the three-dimensional form, which provides more information to users. It is easy to switch between the virtual stores and the physical stores, which further promotes the experience of shopping.

## Description

### TECHNICAL FIELD

The present invention relates to the electronic business technical field, more specifically, to a shopping platform.

### BACKGROUND OF THE INVENTION

With the rapid development of the technologies of computer and of the Internet, the online shopping platform provides a convenient way of shopping for users. Without physical stepping out of the room, the users can purchase the merchandise they want by the simple online operations without the restriction of time and location, which saves both time and labor. However, almost all of the existing online shopping platforms use the displaying form of webpage based on two-dimensional plane, which has a huge difference from the physical shopping in experience. It is hard for users to have a completely understanding on the appearance style of the merchandise before shopping, which increases the risk of buying defects. Another shopping method appears, i.e. that is, checking and comparing the merchandises in physical stores by the consumers, and then shopping online in the corresponding virtual stores. Consequently, the consumers will buy the satisfactory merchandises, however, it does not bring the real convenience to the consumers.

There is a method and an apparatus for providing the commercial information in the prior art. The method for providing the commercial information comprises the following steps: receiving the positioning data of the merchant and the commercial information data; receiving the positioning data of the mobile terminal; comparing the positioning data of the merchant and the mobile terminal; and transmitting the commercial information to the mobile terminal when the difference between the positioning data of the merchant and the mobile terminal is less than a preconfigured value. The disadvantage of the art is lack of the relevance between the physical stores and the virtual stores, which hinders the consumers from switching among them freely and rapidly. Consequently, it is not conductive to meet the shopping experience of the consumers.

### SUMMARY OF THE INVENTION

The aim of the present invention is to provide a displaying method in combination with the three-dimensional shopping platform and the geographical positioning device to solve the said technical.

The technical problem solved by the present invention can be realized by the following scheme:
A displaying method in combination with the three-dimensional shopping platform and the geographical positioning device, the three-dimensional platform is displayed on the mobile terminal by a three-dimensional shopping platform displaying system, wherein the three-dimensional shopping platform displaying system comprises a three-dimensional model and a display module; the display module is defined with a preconfigured-sized graphic displaying area which composes the display interface of the three-dimensional shopping platform; the graphic displaying area is set on the displaying device of the mobile terminal with a pointing device;
a storage module is also comprised; the model unit of the three-dimensional shopping platform and basic data used to build up the three-dimensional model are preconfigured in the storage module; the three-dimensional shopping platform displaying system forms various three-dimensional models according to the basic data and the model unit;
the three-dimensional model is used for indicating the block of the three-dimensional shopping platform; the model unit is used for indicating the store of the three-dimensional shopping platform; the model unit also comprises a displaying area used for displaying the information and a plurality of second three-dimensional models; the second three-dimensional model is used for indicating the merchandise of the three-dimensional shopping platform;
the three-dimensional shopping platform comprises a server, the mobile terminal of the three-dimensional shopping platform is connected to a positioning module; the positioning module is used for determining the current geographical position of the mobile terminal of the three-dimensional shopping platform and for transmitting the geographical position information to the server; the three-dimensional shopping platform adds the information of the virtual stores corresponding to the physical stores located within a certain distance from the current geographical position into the basic data; according to a setting condition, the three-dimensional shopping platform displaying system is arrayed as a three-dimensional model used to display the virtual stores corresponding to the physical stores nearby based on the basic data and model units; the three-dimensional shopping platform displaying system makes the physical stores corresponding to the model units.

Preferably, according to the above displaying method in combination with the three-dimensional shopping platform and the geographical positioning device, wherein the server relates the geographical position information of the physical stores with the corresponding model units; and the model unit indicates the corresponding geographical position information of the physical store by the preconfigured operation.

Preferably, according to the above displaying method in combination with the three-dimensional shopping platform and the geographical positioning device, wherein the preconfigured operation is clicking on a preconfigured position of the model unit by the pointing device.

Preferably, according to the above displaying method in combination with the three-dimensional shopping platform and the geographical positioning device, wherein further comprising an update module; the update module is connected to the storage module and is remotely connected to at least one external data storage server through a communicating module; the update module is used for obtaining the basic data from at least one of the data storage server; and the update module stores the basic data into the storage module.

Preferably, according to the above displaying method in combination with the three-dimensional shopping platform and the geographical positioning device, wherein the setting condition comprises the frequency, the price, the merchandise category of the store and the credit rating which are recommended by friends.

Preferably, according to the above displaying method in combination with the three-dimensional shopping platform and the geographical positioning device, wherein the method of array is in the way of near-to-distant or center-to-periphery.

Preferably, according to the above displaying method in combination with the three-dimensional shopping platform and the geographical positioning device, wherein the positioning module is a GPS positioning module or a BeiDou positioning module.

Preferably, according to the above displaying method in combination with the three-dimensional shopping platform and the geographical positioning device, wherein the three-dimensional shopping platform displaying system also comprises an edit module; the edit module comprises a setting unit used for setting the basic data;
the three-dimensional shopping platform displaying system edits the module unit used for indicating the corresponding physical stores nearby by the pointing device; the three-dimensional shopping platform displaying system adjusts the basic data by the setting unit; the three-dimensional shopping platform displaying system forms a new three-dimensional model according to the modified basic data and the model units; and the three-dimensional shopping platform displaying system displays the graphic data of the new three-dimensional model in the graphic displaying area.

Preferably, according to the above displaying method in combination with the three-dimensional shopping platform and the geographical positioning device, wherein the operation of editing comprises a model unit used for deleting the model unit corresponding to the physical store in the three-dimensional model used for displaying the physical stores nearby.

Preferably, according to the above displaying method in combination with the three-dimensional shopping platform and the geographical positioning device, wherein it also comprises a switching module; the switching module is used for switching the three-dimensional models of the virtual stores corresponding to physical stores and those of other kinds of stores;
a switch operation area is defined on the graphic displaying area; and a preconfigured operation is preformed on the graphic displaying area by users, which triggers the switching module performing a switching action.

The advantageous effects of the above technical solution are as follows, as the above mentioned technical scheme is adopted in the present invention, the stores and merchandises in the present invention are arrayed in the three-dimensional form, which provides more information to users and promotes the shopping experience by switching between the virtual stores and the physical stores conveniently.

### BRIEF DESCRIPTIONS OF THE DRAWINGS

Figure 1 shows a diagram of the connection of the functional modules in the present invention;
Figure 2 shows a structure diagram of the three-dimensional shopping platform displaying system in the present invention;
Figure 3 shows a vertical view diagram of a permutation and combination of the model units of the three-dimensional model in the present invention.

### DESCRIPTIONS OF THE PREFERRED EMBODIMENT

The present invention will be further illustrated in combination with the following figures and embodiments, but it should not be deemed as limitation of the present invention.

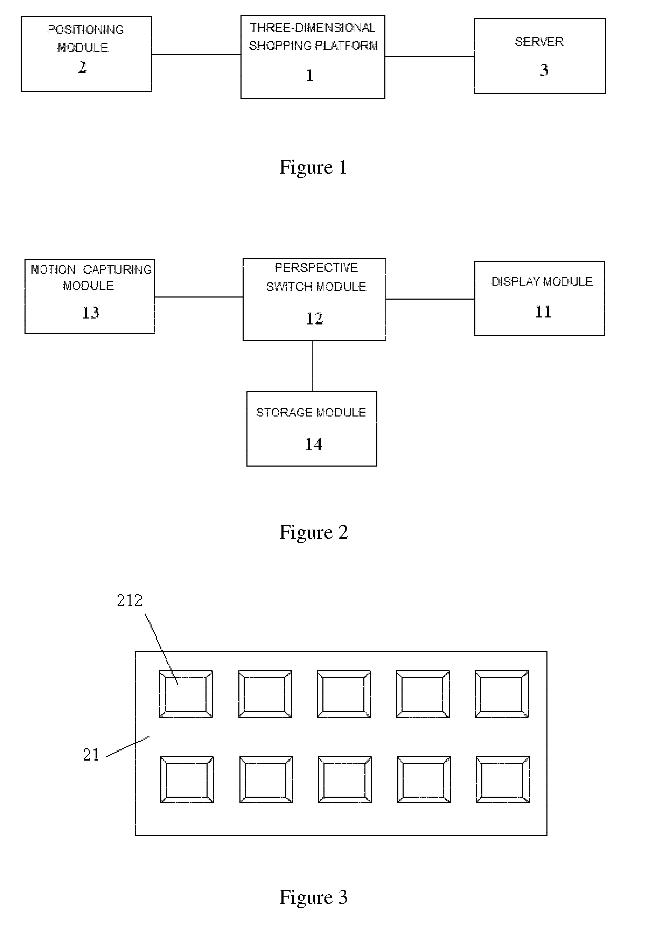

Referring to Figures 1, 2 and 3, the displaying method in combination with the three-dimensional shopping platform and the geographical positioning device. Three-Dimensional Shopping Platform 1 in the present invention is displayed on the mobile terminal by a three-dimensional shopping platform displaying system. A three-dimensional model is defined on the three-dimensional shopping platform displaying system. Meanwhile, the three-dimensional shopping platform displaying system further comprises the followings.

A Display Module 11. A preconfigured-sized graphic displaying area is defined in Display Module 11. There is a coordinate position of the graphic displaying area relative to the three-dimensional model. The coordinate position can be used for determining the position of the graphic displaying area relative to the three-dimensional model, such as the distance and the angle related to three-dimensional model.

A Perspective Switch Module 12, which is connected to Display Module 11. Perspective Switch Module 12 is used for adjusting the three-dimensional model according to the position of the graphic displaying area of Display Module 11 relative to the three-dimensional model. Perspective Switch Module 12 is also used for displaying the corresponding graphic data in the graphic displaying area, wherein the corresponding graphic data is a part of the projection of the three-dimensional model in the plane.

A Motion Capturing Module 13, which is connected to Perspective Switch Module 12. Motion Capturing Module 13 changes the coordinate value of the graphic displaying area relative to the three-dimensional model by capturing the operation of users. Motion Capturing Module 13 determines the position of the graphic displaying area relative to the three-dimensional model, such as the distance and the angle, according to the coordinate value. Motion Capturing Module 13 transmits corresponding control instruction to Perspective Switch Module 12 according to the said relative position. Perspective Switch Module 12 obtains the corresponding graphic data according to the control instruction and displays the corresponding graphic data in the graphic displaying area for being viewed by users.

In the embodiment of the present invention, it is necessary to add a Storage Module 14 into the system while the three-dimensional model is being composed. Storage Module 14 keeps the module unit, i.e., the basic three-dimensional model without being added by any contents, used for composing the three-dimensional model and the basic data used for combining the said model units into various three-dimensional models inside. The basic data comprises a plurality of different position data of the different model units in the three-dimensional model.

Referring to Figure 3, Three-dimensional Model 21 is used for representing the virtual block of the shopping platform system. Model Unit 212 is used for representing the virtual store of the shopping platform system. Model Unit 212 further comprises a displaying area for displaying the information and a plurality of second three-dimensional models. The displaying area is adjusted based on the three-dimensional model. The second three-dimensional model is used for representing the virtual merchandise of the shopping platform system.

Three-dimensional Model 21 in the present technical scheme represents a virtual block. Each Model Unit 212 located in Three-dimensional Model 21 represents a virtual store. A plurality of the displaying areas for displaying the corresponding information and the second three-dimensional models are set on each Model Unit 212. Each second three-dimensional model represents a kind of virtual merchandise. The three-dimensional shopping platform comprises a plurality of virtual blocks formed by the three-dimensional model. In each block, a plurality of virtual stores are arranged trimly. In each virtual store, various virtual merchandises, the second three-dimensional models, are arranged trimly. In each virtual store, the outer wall is "decorated" by the virtual store name, advertisements and other reminding information, such as the discount information and the information of new arrivals. The said information is what displayed in the displaying area used for showing corresponding information.

Three-dimensional Shopping Platform 1 comprises a Server 3. The mobile terminal of Three-dimensional Shopping Platform 1 is connected to a Positioning Module 2. Positioning Module 2 is used for determining the current geographical position of the mobile terminal of Three-dimensional Shopping Platform 1 and is used of transmitting the geographical position information to Server 3. Three-dimensional Shopping platform 1 adds the information of the virtual stores corresponding to the physical stores located within a certain distance from the current geographical position into the basic data. According to a setting condition, the three-dimensional shopping platform displaying system forms a three-dimensional model used for displaying the virtual stores corresponding to the physical stores nearby based on the basic data and the model units by array. The three-dimensional shopping platform displaying system makes the physical stores corresponding to the model units. The setting condition includes, but not limited to, the frequency, price, the merchandise category of the store and the credit rating which are recommended by friends. The means of the array is near-to-distant, center-to-periphery or others. For example, the model unit corresponding to the virtual store whose frequency of the recommendation is higher is put in the significant position of the block represented by the three-dimensional model.

When users go shopping at a certain geographical position, it is necessary to get the information that which physical stores nearby the current geographical position are provided with the corresponding virtual store in Three-dimensional Shopping Platform 1, or which virtual stores in Three-dimensional Shopping Platform 1 are provided with the corresponding physical stores, and the geographical position of the physical stores. Consequently, the required physical stores can be found out conveniently. Three-dimensional Shopping Platform 1 in the present invention is provided with a Positioning Module 2 connected to a mobile terminal. Utilizing the positioning function of Positioning Module 2, a block is generated for users, that is, the three-dimensional model of the virtual store corresponding to the physical store is specially used for displaying the virtual store corresponding to the physical store near the current geographical position. Meanwhile, the displaying ways of the block is not the same as that in the real world. For example, providing the user with a block of his won; the three-dimensional model corresponding to a "block" is set as the clothing block, and the three-dimensional model corresponding to another "block" is set as the food block.

Simultaneously, if the users are interested in the merchandise displayed in the virtual store, Server 3 can relate the geographical position information of the physical store with the corresponding model unit. The model unit displays the geographical position of the corresponding physical store under the preconfigured operation. The model unit obtains the information if the virtual store is provided with a physical store in time and finds out the geographical position of the physical store corresponding to the virtual store rapidly. The close combination of virtual and reality is realized in this way. The preconfigured operation is clicking on the preconfigured position of the model unit by the pointing device and displaying the geographical position of the physical store corresponding to the model unit.

In order to provide the user with the changing information of the virtual store corresponding to the physical store nearby, such as the merchandise renew information and the latest discount information, an update module is also comprised. The update module is connected to the storage module and is remotely connected to at least one external data storage server by a communicating module. The update module is used for obtaining the basic data from at least one of the data storage servers. The update module stores the basic data into the storage module.

Positioning Module 2 is a GPS Positioning Module 2 or a BeiDou Positioning Module 2. In some of the embodiments in the present invention, the assisted GPS positioning system, the WIFI hot spot of major shopping mall, the shopping district or the barometric height is also used for positioning.

The three-dimensional model of the three-dimensional shopping platform displaying system also comprises the model unit corresponding to the virtual store where the user is not interested. The present technical scheme is provided with an editing function. The three-dimensional shopping platform displaying system also comprises an editing module. The editing module comprises a setting unit used for setting basic data. The three-dimensional shopping platform displaying system edits the model unit corresponding to the physical store nearby by the pointing device. The three-dimensional shopping platform displaying system adjusts the basic data by the setting unit. The three-dimensional shopping platform displaying system builds up a new three-dimensional model based on the modified basic data and the model units. The three-dimensional shopping platform displaying system displays the graphic data of the new three-dimensional model in the graphic displaying area.

The said store can be a bookstore, a cinema, a post office, a bank and so on. For example, ordering a book in virtual store after taking a fancy to the book in a physical store and then getting the book by the express delivery, or getting an electronic book on Three-dimensional Shopping Platform 1; or watching a film on Three-dimensional Shopping Platform 1, or getting a film ticket and going to a physical cinema. It closely combines the virtual store with the physical store. To deposit, to remit, and to take cash out in a virtual bank is also comprised.

Furthermore, Three-dimensional Shopping Platform 1 also comprises a switching module; the switching module is used for switching the three-dimensional models of the virtual stores corresponding to the physical stores and those of the other kinds of stores. A switch operation area is defined on the graphic displaying area. A preconfigured operation is manipulated on the graphic displaying area by the users, which triggers the switching module performing a switching action. For example, the display interface of the three-dimensional model of the virtual stores corresponding to the physical stores and the display interface of the three-dimensional model which consists of both the virtual stores provided or not provided with the corresponding physical stores can be switched by the users to meet their different needs.

The three-dimensional model in the present invention is a virtual three-dimensional model which is not physically existed.

Although a typical embodiment of a particular structure of the specific implementation way has been given with the above description and the figures, it is appreciated that other changes based on the spirit of this invention may also be made. Though the preferred embodiments are proposed above, these contents will never be the limitation of this invention.

It is obvious for the skilled in the art to make varieties of changes and modifications after reading the above descriptions. Hence, the Claims attached should be regarded as all the changes and modifications which cover the real intention and the range of this invention. Any and all equivalent contents and ranges in the range of the Claims should be regarded belonging to the intention and the range of this invention.

## Claims

1. A displaying method in combination with the three-dimensional shopping platform (1) and the geographical positioning device, the three-dimensional platform is displayed on the mobile terminal by a three-dimensional shopping platform (1) displaying system, wherein the Three-dimensional Shopping Platform (1) displaying system comprises:
a Three-dimensional Model (21);
a Display Module (11); and
a Storage Module (14);
wherein, the Display Module (11) is defined with a preconfigured-sized graphic displaying area which composes the display interface of the Three-dimensional Shopping Platform (1); the graphic displaying area is set on the displaying device of the mobile terminal with a pointing device; the model unit of the Three-dimensional Shopping Platform (1) and basic data used to build up the Three-dimensional Model (21) are preconfigured in the Storage Module (14); the Three-dimensional Shopping Platform (1) displaying system forms various three-dimensional models according to the basic data and the model unit; the Three-dimensional Model (21) is used for indicating the block of the Three-dimensional Shopping Platform (1); the model unit is used for indicating the store of the Three-dimensional Shopping Platform (1); the model unit also comprises a displaying area used for displaying the information and a plurality of second three-dimensional models; the second three-dimensional model is used for indicating the merchandise of the Three-dimensional Shopping Platform (1); the Three-dimensional Shopping Platform (1) comprises a Server (3), the mobile terminal of the Three-dimensional Shopping Platform (1) is connected to a Positioning Module (2); the Positioning Module (2) is used for determining the current geographical position of the mobile terminal of the Three-dimensional Shopping Platform (1) and for transmitting the geographical position information to the Server (3); the Three-dimensional Shopping Platform (1) adds the information of the virtual stores corresponding to the physical stores located within a certain distance from the current geographical position into the basic data; according to a setting condition, the Three-dimensional Shopping Platform (1) displaying system is arrayed as a three-dimensional model used to display the virtual stores corresponding to the physical stores nearby based on the basic data and model units; the Three-dimensional Shopping Platform (1) displaying system makes the physical stores corresponding to the model units.

2. The displaying method in combination with the Three-dimensional Shopping Platform (1) and the geographical positioning device as disclosed in Claim 1, wherein the Server (3) relates the geographical position information of the physical stores with the corresponding model units; and the model unit indicates the corresponding geographical position information of the physical store by the preconfigured operation.

3. The displaying method in combination with the Three-dimensional Shopping Platform (1) and the geographical positioning device as disclosed in Claim 2, wherein the preconfigured operation is clicking on a preconfigured position of the model unit by the pointing device.

4. The displaying method in combination with the Three-dimensional Shopping Platform (1) and the geographical positioning device as disclosed in Claim 3, wherein further comprising an update module; the update module is connected to the Storage Module (14) and is remotely connected to at least one external data storage server through a communicating module; the update module is used for obtaining the basic data from at least one of the data storage server; and the update module stores the basic data into the Storage Module (14).

5. The displaying method in combination with the Three-dimensional Shopping Platform (1) and the geographical positioning device as disclosed in Claim 1, wherein the setting condition comprises the frequency, the price, the merchandise category of the store and the credit rating which are recommended by friends.

6. The displaying method in combination with the Three-dimensional Shopping Platform (1) and the geographical positioning device as disclosed in Claim 5, wherein the method of array is in the way of near-to-distant or center-to-periphery.

7. The displaying method in combination with the Three-dimensional Shopping Platform (1) and the geographical positioning device as disclosed in Claim 1, wherein the Positioning Module (2) is a GPS positioning module or a BeiDou positioning module.

8. The displaying method in combination with the Three-dimensional Shopping Platform (1) and the geographical positioning device as disclosed in Claim 7, wherein the Three-dimensional Shopping Platform (1) displaying system also comprises an edit module; the edit module comprises a setting unit used for setting the basic data;
the Three-dimensional Shopping Platform (1) displaying system edits the module unit used for indicating the corresponding physical stores nearby by the pointing device; the Three-dimensional Shopping Platform (1) displaying system adjusts the basic data by the setting unit; the Three-dimensional Shopping Platform (1) displaying system forms a new three-dimensional model according to the modified basic data and the model units; and the Three-dimensional Shopping Platform (1) displaying system displays the graphic data of the new three-dimensional model in the graphic displaying area.

9. The displaying method in combination with the Three-dimensional Shopping Platform (1) and the geographical positioning device as disclosed in Claim 1, wherein the operation of editing comprises a Model Unit (212) used for deleting the model unit corresponding to the physical store in the three-dimensional model used for displaying the physical stores nearby.

10. The displaying method in combination with the Three-dimensional Shopping Platform (1) and the geographical positioning device as disclosed in Claim 9, wherein it also comprises a switching module; the switching module is used for switching the three-dimensional models of the virtual stores corresponding to physical stores and those of other kinds of stores;
a switch operation area is defined on the graphic displaying area; and a preconfigured operation is preformed on the graphic displaying area by users, which triggers the switching module performing a switching action.
